# EUROPEAN PATENT SPECIFICATION

(11) **EP 2 878 586 B1**
(45) Date of publication and mention of the grant of the patent: **22.11.2017**
(21) Application number: 14195168.1
(22) Date of filing: 27.11.2014
(51) Int. Cl.: C04B 28/02, C04B 28/04, C04B 28/16, C04B 7/345

(54) **Cementitious products obtainable from disposed concrete**
Zementöses Produkt erhaltbar aus Abfallbeton
Produits cimentaires obtenus à partir de béton disposés

(30) Priority: 27.11.2013 IT TO20130962
(43) Date of publication of application: 03.06.2015
(73) Proprietor: Buzzi Unicem S.p.A., 15033 Casale Monferrato (AL) (IT); Nova Res S.r.l., 28100 Novara (IT)
(72) Inventor: CANONICO, Fulvio, I-10138 TORINO (IT); GASTALDI, Daniela, I-13039 TRINO (Vercelli) (IT); CAPELLI, Livio, I-15030 ROSIGNANO MONFERRATO (Alessandria) (IT); BOCCALERI, Enrico, I-15121 SPINETTA MARENGO (Alessandria) (IT)
(74) Representative: Gerbino, Angelo

(56) References cited:
- DE-A1- 19 641 583
- Marcela Friderichova: "Hydration of Belite Cement prepared from Recycled Concrete Residues", Ceramics - SIlikaty, 31 December 2007 (2007-12-31), XP055132204, Retrieved from the Internet: URL:http://www.ceramics-silikaty.cz/2007/p df/2007_01_045.pdf [retrieved on 2014-07-29]
- YAN JUN LIU ET AL: "Active Belite Cement Clinker Produced with Mineral Waste", ADVANCED MATERIALS RESEARCH, vol. 610-613, 1 December 2012 (2012-12-01) , pages 2378-2385, XP055183616, ISSN: 1022-6680, DOI: 10.4028/www.scientific.net/AMR.610-613.237 8

## Description

Together with bricks, demolition wastes constitute the main waste in the construction materials industry.

These are mostly dumped or used as fill. However, where current regulations allow, it they can be re-approved and reutilised.

This re-use relates mainly to the coarse fraction (Ø > 5 mm) obtained before breaking up, screening and disposing of the fine fraction (Ø < 5 mm). The coarse fraction can in fact be used as an alternative to natural aggregates without significantly influencing the final properties of the concrete.

Re-use of the fine fraction has proved to be more problematical, requiring further heat or mechanical treatments in order to bring about separation of the fine aggregates from the hydrated cement, which substantially comprises free lime (CaO) and anhydrous calcium silicates, and can potentially be reused in processes for the production of a binder with low CO₂ emissions.

Document DE-10 2006 049 836 A1 describes a thermo-mechanical process for processing the fine fraction of waste concrete with a view to re-use for the production of hydraulic binders.

Document Marcela Fridrichova, "Hydration of Belite Cement prepared from Recycled Concrete Residues", Ceramics - Silikaty, 31 December 2007, retrieved from the internet: URL:http://www.ceramies-silikaty.cz/2007/pdf/2007_01_045.pdf, discloses a process for recycling "undersize fractions" of waste concrete, which are mixed as such with limestone in order to prepare belite clinker requiring a long hydration time.

Even with the use of known processes the problem of succeeding in reusing fine fractions of concrete contaminated with other construction materials (for example such as plasterboard walls, or sulfates present in the cements used in construction), which are generally present, still remains.

The presence of wastes containing gypsum and the consequent high SO₃ content present in the fine fraction after the operations of screening and separation in fact limits their use in the production of concrete, in that fractions of this nature have considerable contraindications from the rheological point of view.

On the other hand, although it is possible to use small quantities thereof in the production of Portland clinker, the concentrations are in this case rather limited, so that recovery is necessarily partial and incomplete.

The object of this invention is therefore to overcome the problems of the known art and to reutilise waste material which has appreciable incorporated energy potential.

In accordance with the invention, this object is accomplished thanks to a process for the production of clinker having the characteristics described in claim 1 below.

The mixture used in the process according to the invention may also comprise shale, marl and/or clay in a quantity of up to 45% by weight.

This mixture may also advantageously comprise calcium sulfate in a quantity of up to 10% by weight, which is already present in the powder and/or added separately to the mixture, and CaF₂ in a quantity of up to 1% by weight.

The process of this invention makes it possible to obtain a clinker having a high β-C₂S content, this clinker having a β-C₂S content of > 60% by weight, a C₄A₃$ content of < 5% by weight and a C₃S content of < 15% by weight and preferably < 10% by weight.

Without being necessarily bound to this explanation, it can be assumed that the mixture used in the process according to the invention is suitable for the production of a clinker by firing at low temperature, thanks to the stabilising effect which the SO₃ present in the demolition wastes exercises in relation to β-C₂S and thanks to the favourable effect of the presence of cementitious mortar present in the demolition wastes from the thermodynamic point of view. This mortar, which already consists of hydrated calcium silicates, is in fact easier to fire than an untreated mixture. The combination of these factors therefore makes it possible to produce a particularly reactive clinker which is advantageous from the energy point of view.

The clinker which can be obtained by the process of the invention may therefore be produced using calcareous material having a smaller concentration of CaO than those typically used in the production of Portland clinker, as an enrichment for the powder, thus bringing about further improvements in efficiency for the manufacturing unit which would otherwise be unable to handle quarried calcareous materials having a low concentration of CaO.

The clinkers having a high concentration of β-C₂S which is stabilised by the presence of SO₃ in its matrix therefore offer the possibility of recovering in their production cycle dehydrated cement obtained from the fine fraction of waste concrete.

The clinker which can be obtained by the process according to the invention can be mixed in variable quantities with other components in order to obtain cementitious binders of various kinds - for example of the Portland, VLH (very low heat) or CSA type - in which the clinker may or may not constitute the main ingredient.

In particular, another subject of this invention is a cementitious binder comprising the aforesaid clinker in a quantity of between 10 and 90% by weight, Portland clinker in a quantity of between 5 and 45% by weight, fly ash and/or blast furnace slag and/or natural pozzolanas in a quantity of up to 85% by weight.

Such a binder may also comprise calcium sulfate in a quantity of up to 5% by weight and/or limestone in a quantity of up to 25% by weight.

Yet another subject of this invention is a cementitious binder comprising the aforesaid clinker in a quantity of between 30 and 75% by weight, CSA clinker in a quantity of between 60 and 15% by weight and anhydrite or calcium sulfate in a quantity of between 10 and 25 % by weight.

The cementitious binder according to the invention may be used in concretes or mortars preferably having a water/cementitious binder ratio by weight of between 0.3 and 0.7.

Further advantages and characteristics of this invention will be apparent from the following embodiments provided by way of a non-limiting example, in which all the percentages are to be regarded as being by weight unless indicated otherwise.

### EXAMPLES

Table I below shows the compositions of the powder or fine fraction of demolition concretes of different origin, of particular mixtures according to the invention which use these fractions in quantities up to 80% by weight and clinkers obtained from the firing of those mixtures (compositions SD1-SD4). The table also shows the composition of a comparison clinker (SD5) which has been produced using only raw materials not containing SO₃ in the firing process.

**TABLE I**

| **Composition of the fine fraction of demolition wastes of different origin** | | | | | |
|---|---|---|---|---|---|
| | **SD 1** | **SD 2** | | **SD 3** | **SD 4** |
| SO₃ | 5 | 4 | | 3 | 2 |
| CaO | 37 | 30 | | 22 | 15 |
| SiO₂ | 22 | 30 | | 37 | 45 |
| Al₂O₃ | 4 | 4 | | 5 | 7 |
| Fe₂O₃ | 3 | 3 | | 3 | 3 |
| PF | 25 | 25 | | 25 | 25 |
| other | 4 | 4 | | 5 | 3 |
| | | | | | |
| | | | | | |

| **Composition of the mixture for the production of clinker (%)** | | | | | |
|---|---|---|---|---|---|
| | **SD 1** | **SD 2** | **SD 3** | **SD 4** | **SD 5** |
| Demolition wastes | 80 | 58 | 45 | 37 | 0 |
| Limestone | 20 | 41 | 53.5 | 61.5 | 54 |
| Anhydrite | 0 | 1 | 1.5 | 1.5 | |
| **Shale** | | | | | 46 |

| **Mineralogical composition of the clinker (%)** | | | | | |
|---|---|---|---|---|---|
| | Clinker SD1 | Clinker SD2 | Clinker SD3 | Clinker SD4 | Clinker SD5 |
| C₂S-beta | 73 | 78 | 80 | 81 | 42 |
| C₂S-gamma | | | | | 33 |
| C₃A | 7 | 6 | 7 | 9 | 7 |
| C₄AF | 10 | 8 | 7 | 6 | 8 |
| CaO | 1 | 1 | 1 | 1 | 2 |
| C₃S | 5 | 4 | 3 | 2 | 2 |
| Other (*) | 4 | 3 | 2 | 1 | 6 |
| | | | | | |
| Firing temperature | 1330°C | 1330°C | 1330°C | 1330°C | 1300°C |

| | | | | | |
|---|---|---|---|---|---|
| (* MgO, C2AS,K₂SO₄ etc.) | | | | | |

Clinker SD2 identified above was then used for the production of cementitious binders, the compositions and compression strengths of which developed over time (see columns A-C) are shown in Table II below. Column D in Table II instead shows data corresponding to a comparison composition based on SD5 clinker. As will be noted from the abovementioned data, composition D has no significant hydraulic properties, as the hydraulic activation effect of the C2S which is instead present in the binder compositions according to the invention which have been manufactured from powder containing demolition wastes rich in SO₃ is absent.

**TABLE II**

| Composition | A | B | C | D |
|---|---|---|---|---|
| SD2 clinker (%) | 100 | 50 | 50 | |
| Fly ash (%) | | 50 | | |
| II A - LL 42.5 R cement(%) | | 0 | 50 | |
| **SD5 clinker** (%) | | | | 100 |
| 28 day compression strength (MPa) | 45 | 25 | 45 | 1.9 |
| 90 day compression strength (MPa) | 55 | 45 | 55 | 4.5 |

Of course without altering the principle of the invention details of implementation and embodiments may be varied widely in comparison with what has been described purely by way of example without thereby going beyond the scope of the invention as defined by the appended claims.

## Claims

1. Process for the production of a clinker having a β-C2S content of > 60% by weight, a C4A3$ content < 5 wt.% and a C3S content < 15 wt.%, the said process comprising the stages of:
i) preparing a particulate mixture comprising:
- powder having an SO₃ content in the range 2% to 10 wt. % and obtainable through firing the fine fraction of waste concrete having a particle size lower than 500 µm at a temperature in the range 1150 to 1350 °C, in an amount in the range 20 to 90 wt. %, and
- limestone in an amount in the range 10 to 65 wt.%,
ii) firing the mixture at a temperature of between 1150 and 1350°C.

2. Process according to claim 1, in which the said mixture comprises shale, marl and/or clay in an amount up to 45 wt. %.

3. Process according to claim 1 or 2, in which the said mixture also comprises calcium sulfate in an amount up to 10 wt.%, said calcium sulfate being already present in the said powder and/or separately added to the mixture.

4. Process according to any one of the preceding claims, in which the said mixture also comprises CaF₂ in an amount of up to 1% by weight.

5. Process according to any one of the preceding claims, in which the said clinker has a C3S content of < 10% by weight.

6. Cementitious binder comprising clinker which can be obtained by the process according to any one of the preceding claims.

7. Cementitious binder according to claim 6, comprising the said clinker in a quantity of between 10 and 90% by weight, Portland clinker in a quantity of between 5 and 45% by weight, fly ash and/or blast furnace slag and /or natural pozzolanas in a quantity of up to 85% by weight.

8. Cementitious binder according to claim 7, also comprising calcium sulfate in a quantity of up to 5% by weight and/or limestone in a quantity of up to 25% by weight.

9. Cementitious binder according to claim 6, comprising the said clinker in a quantity of between 30 and 75% by weight, sulfoaluminate clinker (CSA) in a quantity of between 60% and 15% by weight and anhydrite and/or calcium sulfate in a quantity of between 10 and 25% by weight.

10. Concrete comprising a cementitious binder according to any one of claims 6 to 9, having a water/cementitious binder ratio between 0.3 and 0.7.

11. Mortar comprising a cementitious binder according to any one of claims 6 to 9, having a water/cementitious binder ratio between 0.3 and 0.7.

## Patentansprüche

1. Verfahren zur Herstellung eines Klinkers mit einem β-C2S-Gehalt von > 60 Gew.-%, einem C4A3$-Gehalt von < 5 Gew.-% und einem C3S-Gehalt von < 15 Gew.-%, wobei das Verfahren die Schritte umfasst:
i) Herstellen eines teilchenförmigen Gemischs, umfassend:
- ein Pulver mit einem SO₃-Gehalt im Bereich von 2 Gew.-% bis 10 Gew.-%, das durch Brennen der feinen Fraktion von Betonabfällen mit einer Teilchengröße von weniger als 500 µm bei einer Temperatur im Bereich von 1150 bis 1350 °C erhältlich ist, in einer Menge im Bereich von 20 bis 90 Gew.-%, und
- Kalkstein in einer Menge im Bereich von 10 bis 65 Gew.-%,
ii) Brennen des Gemischs bei einer Temperatur zwischen 1150 und 1350 °C.

2. Verfahren nach Anspruch 1, bei dem das Gemisch Schiefer, Mergel und/oder Ton in einer Menge bis zu 45 Gew.-% umfasst.

3. Verfahren nach Anspruch 1 oder 2, bei dem das Gemisch auch Calciumsulfat in einer Menge bis zu 10 Gew.-% umfasst, wobei das Calciumsulfat bereits in dem Pulver vorliegt und/oder separat dem Gemisch zugesetzt wird.

4. Verfahren nach einem der vorhergehenden Ansprüche, bei dem das Gemisch auch CaF₂ in einer Menge bis zu 1 Gew.-% umfasst.

5. Verfahren nach einem der vorhergehenden Ansprüche, bei dem der Klinker einen C3S-Gehalt von < 10 Gew.-% aufweist.

6. Zementartiges Bindemittel, das Klinker umfasst und das durch das Verfahren nach einem der vorhergehenden Ansprüche erhalten werden kann.

7. Zementartiges Bindemittel nach Anspruch 6, das den Klinker in einer Menge zwischen 10 und 90 Gew.-%, Portland-Klinker in einer Menge zwischen 5 und 45 Gew.-%, Flugasche und/oder Hochofenschlacke und/oder natürliche Puzzolane in einer Menge bis zu 85 Gew.-% umfasst.

8. Zementartiges Bindemittel nach Anspruch 7, das auch Calciumsulfat in einer Menge bis zu 5 Gew.-% und/oder Kalkstein in einer Menge bis zu 25 Gew.-% umfasst.

9. Zementartiges Bindemittel nach Anspruch 6, das den Klinker in einer Menge zwischen 30 und 75 Gew.-%, Sulfoaluminat-Klinker (CSA) in einer Menge zwischen 60 Gew.-% und 15 Gew.-%, und Anhydrit und/oder Calciumsulfat in einer Menge zwischen 10 und 25 Gew.-% umfasst.

10. Beton, der ein zementartiges Bindemittel nach einem der Ansprüche 6 bis 9 mit einem Wasser/zementartiges Bindemittel-Verhältnis zwischen 0,3 und 0,7 umfasst.

11. Mörtel, der ein zementartiges Bindemittel nach einem der Ansprüche 6 bis 9 mit einem Wasser/zementartiges Bindemittel-Verhältnis zwischen 0,3 und 0,7 umfasst.

## Revendications

1. Processus pour la production de scories de ciment ayant une teneur en β-C2S > 60 % en poids, une teneur en C4A3$ < 5 % en poids et une teneur en C3S < 15 % en poids, ledit processus comprenant les étapes de :
i) préparation d'un mélange particulaire comprenant :
- de la poudre ayant une teneur en SO₃ dans la plage de 2 % à 10 % en poids et pouvant être obtenue par le chauffage de la fine fraction de béton résiduel ayant une taille de particule inférieure à 500µm à une température dans la plage de 1150 à 1350 °C, en une quantité dans la plage de 20 à 90 % en poids, et
- du calcaire en une quantité dans la plage de 10 à 65 % en poids,
ii) chauffage du mélange à une température dans la plage de 1150 à 1350 °C.

2. Processus selon la revendication 1, dans lequel ledit mélange comprend du schiste, de la marne et/ou de l'argile en une quantité montant jusqu'à 45 % en poids.

3. Processus selon la revendication 1 ou 2, dans lequel ledit mélange comprend également du sulfate de calcium en une quantité montant jusqu'à 10 % en poids, ledit sulfate de calcium étant déjà présent dans ladite poudre et/ou ajouté séparément au mélange.

4. Processus selon l'une quelconque des revendications précédentes, dans lequel ledit mélange comprend également du CaF₂ en une quantité montant jusqu'à 1 % en poids.

5. Processus selon l'une quelconque des revendications précédentes, dans lequel lesdites scories de ciment présentent une teneur en C3S < 10 % en poids.

6. Liant cimentaire comprenant des scories de ciment qui peuvent être obtenues par le processus selon l'une quelconque des revendications précédentes.

7. Liant cimentaire selon la revendication 6, comprenant lesdites scories de ciment en une quantité entre 10 et 90 % en poids, des scories de ciment de Portland en une quantité entre 5 et 45 % en poids, des cendres volantes et/ou du laitier de haut fourneau et/ou de la pouzzolane naturelle en une quantité montant jusqu'à 85 % en poids.

8. Liant cimentaire selon la revendication 7, comprenant également du sulfate de calcium en une quantité montant jusqu'à 5 % en poids et/ou du calcaire en une quantité montant jusqu'à 25 % en poids.

9. Liant cimentaire selon la revendication 6, comprenant lesdites scories de ciment en une quantité entre 30 et 75 % en poids, des scories de ciment de sulfoaluminate (CSA) en une quantité entre 60 % et 15 % en poids et de l'anhydrite et/ou du sulfate de calcium en une quantité entre 10 et 25 % en poids.

10. Béton comprenant un liant cimentaire selon l'une quelconque des revendications 6 à 9, ayant un rapport eau/liant cimentaire entre 0,3 et 0,7.

11. Mortier comprenant un liant cimentaire selon l'une quelconque des revendications 6 à 9, ayant un rapport eau/liant cimentaire entre 0,3 et 0,7.
